(19) Europäisches Patentamt
European Patent Office
Office européen des brevets

(11) **EP 3 854 212 B1**

(12) **EUROPEAN PATENT SPECIFICATION**

(45) Date of publication and mention
of the grant of the patent:
**26.03.2025 Bulletin 2025/13**

(21) Application number: **19861767.2**

(22) Date of filing: **20.09.2019**

(51) International Patent Classification (IPC):
*A01N 65/06* (2009.01)    *A01N 25/30* (2006.01)
*A01N 65/44* (2009.01)    *A01P 3/00* (2006.01)
*A01N 43/16* (2006.01)    *A01P 15/00* (2006.01)

(52) Cooperative Patent Classification (CPC):
(C-Sets available)
**A01N 43/16; A01N 65/06; A01N 65/44; A01P 3/00;
A01P 15/00**                                      (Cont.)

(86) International application number:
**PCT/JP2019/037052**

(87) International publication number:
**WO 2020/059864 (26.03.2020 Gazette 2020/13)**

(54) **PLANT PATHOGEN CONTROL AGENT**

MITTEL ZUR BEKÄMPFUNG VON PFLANZENPATHOGENEN

AGENT DE LUTTE CONTRE DES PATHOGÈNES DE PLANTES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.09.2018   JP 2018177729**

(43) Date of publication of application:
**28.07.2021   Bulletin 2021/30**

(73) Proprietors:
• **Marubeni Corporation
Chiyoda-ku, Tokyo 100-8088 (JP)**
• **Chuetsu Pulp and Paper Co., Ltd.
Tokyo 104-8124 (JP)**

(72) Inventors:
• **ISHIGA, Yasuhiro
Tsukuba-shi, Ibaraki 305-8577 (JP)**
• **TANAKA, Hiroyuki
Takaoka-shi, Toyama 933-8533 (JP)**

(74) Representative: **Grünecker Patent- und
Rechtsanwälte
PartG mbB
Leopoldstraße 4
80802 München (DE)**

(56) References cited:
WO-A1-2014/203121    WO-A1-2017/158626
WO-A1-2018/144482    WO-A1-2018/174239
WO-A2-2018/083539    JP-A- 2012 188 367
JP-A- 2016 069 295    JP-A- 2016 069 295
JP-A- H02 104 501

(52) Cooperative Patent Classification (CPC): (Cont.)

C-Sets
**A01N 65/06, A01N 25/10, A01N 25/30;**
**A01N 65/44, A01N 25/10, A01N 25/30**

**Description**

TECHNICAL FIELD

The present invention relates to a novel plant pathogen control agent, and in particular, relates to a plant pathogen control agent that is sparged or sprayed onto the foliage or the stem of a plant to control plant pathogens.

BACKGROUND ART

As the food situation of the world, it is expected that the world's population will approach 10 billion in the future, and it is necessary to dramatically improve food production in order to cover the food of all populations. A loss in food resources due to a disease is approximately 15% per year, and a food loss corresponding to approximately 800 million people occurs, and thus, in order to improve the food production, it is important to suppress a food loss due to a disease.
As countermeasures to the diseases described above, 1) cultural control using the cultivation of a resistant crop, 2) chemical control using agricultural chemicals such as a disinfectant, 3) biological control using a natural predator, and 4) comprehensive disease and pest management for suppressing the disease outbreak while reducing a load on the environment by combining physical control such as a sticky board or a net are recommended. However, in the actual agriculture site, a loss in the crop production is currently minimized by control focusing on 2) the chemical control using the agricultural chemicals.
In such a circumstance, the appearance of resistant pathogens with respect to the agricultural chemicals has been reported, which is a problem that is not capable of being ignored in the agriculture site. In addition, most of the agricultural chemicals that are currently used have an effect of specifically inhibiting a metabolism pathway of the pathogens, but significantly suppresses the growth of a plant as a side effect, and also causes the environment pollution due to heavy use of the agricultural chemicals, which is a problem.
Therefore, the development of a plant disease control agent using a natural material that is not based on the chemical control using the agricultural chemicals has been required as an agricultural issue.
On the other hand, in a technical field completely different from the plant disease control agent, cellulose nanofibers that are a natural material produced by plants as a main constituent configuring trees, grasses, flowers, and the like have attracted attention.
The cellulose nanofibers are the world's most advanced biomass material in which plant fibers obtained from woods and the like are highly refined to the nano order.
The cellulose nanofibers are derived from plant fibers and have excellent properties such as having a small environmental load in the production or disposal, having the same degree of tensile break strength as that of ultra-high strength fibers such as multi-walled nanotubes or aramid fibers while having light weight, and having an excellent degree of expansion and contraction according to a temperature change, which is the same degree as that of glass. In addition, the cellulose nanofibers can be supplied at a lower price than carbon fibers or the like, and thus, are also said to be a fiber material that is easily turned to practical use.
Examples of technical development using the cellulose nanofibers mainly include a vehicle body material in an automotive field, a housing material in a household appliance field, an architecture material in a building material field, an electronic component in an information technical field, and a container material in a packaging and container field.
In addition, in PATENT LITERATURE 1 or PATENT LITERATURE 2, it is disclosed that the cellulose nanofibers can be applied to medical drugs or foods, and cosmetics, as an emulsifying agent or a decomposition inhibitor containing the cellulose nanofibers as a main ingredient.
In PATENT LITERATURE 3, it is disclosed that the cellulose nanofibers are used as a surface protective sheet of a paper-made molded product for food preservation by using amphipathic properties of the cellulose nanofibers.
PATENT LITERATURE 4 describes compositions comprising cellulose nanomaterials as food coatings to "improve [...] moisture barrier and wettability onto fruit surfaces" and to "control physiological activity and enhance storability of food products".
PATENT LITERATURE 5 relates to aqueous compositions comprising cellulose nanofibers and a pesticide with a specified water solubility can be used to control plant pathogens.
However, there has been no idea of applying the cellulose nanofibers as described above to the plant pathogen control agent, and neither consideration with respect to compounding or additives specializing in functionality and operability unique to the plant pathogen control agent nor consideration with respect to the specifying of plants or plant pathogens to be a target have not been known.

CITATION LIST

PATENT LITERATURE

PATENT LITERATURE 1: JP 2015-157796 A
PATENT LITERATURE 2: JP 2016-65116 A
PATENT LITERATURE 3: JP 2014-50835 A
PATENT LITERATURE 4: WO 2018-144482 A
PATENT LITERATURE 5: JP 2016-069295 A

SUMMARY OF INVENTION

The invention for which protection is sought is defined in the appended claims. Claim 1 is directed to the use of cellulose nanofibers for controlling plant pathogens on plants. Further, the claims are directed to a method for controlling plant pathogens on plants using cellulose nanofibers.

TECHNICAL PROBLEM

The present invention has been made in consideration of the problems described above, and an object of the present invention is to provide a novel plant pathogen control agent.

Another object of the present invention is to provide a plant pathogen control agent that is used to control plant pathogens on foliage or stems of plants and is a novel method for using cellulose nanofibers.

SOLUTION TO PROBLEM

As a result of the intensive studies of the present inventors, it has been found that a plant pathogen control agent containing cellulose nanofiber, in particular, plant-derived cellulose nanofibers, as an active ingredient, is sparged or sprayed onto plants, and thus, a function of controlling plant pathogens, in particular, causative bacterium, rust fungi, and pathogenic fungi, is obtained, and the present invention has been completed.

In addition, the present inventors have found that in a case where the plant pathogen control agent is sparged or sprayed onto the foliage or the stems of the plants, the surface of a nanofiber-coated layer to be formed on the foliage or the stems has hydrophilicity, and as a result thereof, the plant pathogens that are attached onto a plant surface and are infiltrated into the plant from the foliage can be suppressed by recognizing a structure or hydrophobicity on the plant surface. In addition, it has been found that the plant pathogens that are infiltrated into the plant from a natural aperture of the foliage can be prevented from being infiltrated by physically covering the natural aperture with the nanofiber-coated layer, and the present invention has been completed.

Accordingly, according to the present invention, the objects described above are attained by a plant pathogen control agent that is used to control plant pathogens on plants and contains cellulose nanofibers as an active ingredient.

At this time, the plant pathogens to be a target may be causative bacterium selected from the group consisting of Pseudomonas bacterium, Xanthomonas bacterium, Pectobacterium bacterium, Agrobacterium bacterium, and Clavibacter bacterium.

In addition, the plant pathogens to be a target may be rust fungi selected from the group consisting of Phakopsora rust fungi, Hemileia rust fungi, and Puccinia rust fungi, or pathogenic fungi.

In addition, the plants to be a target may be plants selected from the group consisting of cruciferous plants, leguminous plants, solanaceous plants, and rubiaceous plants.

As described above, a control effect of a plant disease with respect to plants can be effectively exhibited by specifying the plant pathogens or the plants to be a target.

At this time, a surface of a nanofiber-coated layer to be formed by applying the plant pathogen control agent onto foliage or stems of the plants and then by drying the plant pathogen control agent may have hydrophilicity.

In addition, the nanofiber-coated layer to be formed by applying the plant pathogen control agent onto the foliage or the stems of the plants and then by drying the plant pathogen control agent may be approximately in a cancellate shape.

In addition, the cellulose nanofibers may be a plant-derived nanofiber material selected from the group consisting of gramineous plants, broadleaf trees, and needleleaf trees.

According to the configuration described above, surface wax of the foliage or the stems of the plants generally has hydrophobicity, and a hydrophilic nanofiber-coated layer is formed on the surface of the plant by applying the amphipathic properties of the cellulose nanofibers, and thus, the plant pathogens are not capable of recognizing the structure or the hydrophobicity of the plant surface, and the infiltration from the plant surface can be suppressed.

In addition, according to the configuration described above, a stomatal aperture of the plant is not completely covered but is covered in a cancellate shape (a branched shape), and thus, the size of the void of the stomatal aperture to be an infiltration path of the bacterium can be reduced into a cancellate shape. In addition, the infiltration of the bacterium can be prevented while the passing of gas such as oxygen or carbon dioxide, and moisture vapor is maintained, which is the function of the pores of the plant, necessary for plant growth.

In addition, according to the configuration described above, the cellulose nanofibers are the plant-derived nanofiber material, and thus, affinity with respect to the surface of the plant increases, and thus, the plant pathogens are not capable of further recognizing the structure or the hydrophobicity of the plant surface, and the infiltration from the plant surface can be further suppressed.

At this time, in the cellulose nanofibers, a thickness may be 3 to 200 nm, a crystallinity degree may be greater than or equal to 50, an $\alpha$-cellulose content ratio of a raw material may be 60 to 99 mass%, an average polymerization degree may be 500 to 900, and an average molecular weight may be 90000 to 140000 (the average polymerization degree and the average molecular weight are a numerical value that is measured by a measurement method B described below).

In addition, a content of the cellulose nanofibers may be 0.01 to 2.0 mass% with respect to a total mass of the plant pathogen control agent.

In addition, the plant pathogen control agent may further contain an aqueous solvent, and a surfactant that is dissolved in the aqueous solvent, in which the surfactant may be a non-ionic surfactant.

According to the configuration described above, in order to specialize operability or functionality unique to the plant pathogen control agent, not only the thickness, the crystallinity degree, the content ratio of the $\alpha$-cellulose of the raw material, the average polymerization degree, the average molecular weight, and the like of the cellulose nanofibers, but also a compounding ingredient of the cellulose nanofibers, the material of the surfactant, and the like are determined, and thus, an ideal plant pathogen control agent can be attained.

ADVANTAGEOUS EFFECTS OF INVENTION

According to the present invention, a novel plant pathogen control agent can be provided.

In addition, a plant pathogen control agent that is used to control plant pathogens on foliage or stems of plants and is a novel method for using cellulose nanofibers can be provided.

BRIEF DESCRIPTION OF DRAWINGS

FIG. 1 is a picture comparing foliage of a cabbage plant subjected to bacterial inoculation after a plant pathogen control agent of this example is sprayed.

FIG. 2 is a graph comparing the number of bacterium of the foliage of the cabbage plant subjected to the bacterial inoculation.

FIG. 3 is a (first) graph comparing a disease control ratio of the foliage of the cabbage plant subjected to the bacterial inoculation.

FIG. 4 is a (second) graph comparing the disease control ratio of the foliage of the cabbage plant subjected to the bacterial inoculation.

FIG. 5 is a picture comparing foliage of a soybean plant subjected to the bacterial inoculation.

FIG. 6 is a picture comparing the foliage of the soybean plant subjected to rust fungal inoculation.

FIG. 7 is a picture comparing foliage of a tomato plant subjected to the bacterial inoculation.

FIG. 8 is a picture comparing foliage of a tobacco plant subjected to the bacterial inoculation.

FIG. 9 is a picture comparing foliage of coffee tree seedling subjected to the rust fungal inoculation.

FIG. 10 is a graph comparing the number of blotches of the foliage of the soybean plant subjected to the rust fungal inoculation.

FIG. 11 is an SEM image comparing the foliage of the cabbage plant after the plant pathogen control agent is sprayed.

FIG. 12 is a confocal laser microscope image comparing the foliage of the cabbage plant subjected to the bacterial inoculation.

DESCRIPTION OF EMBODIMENTS

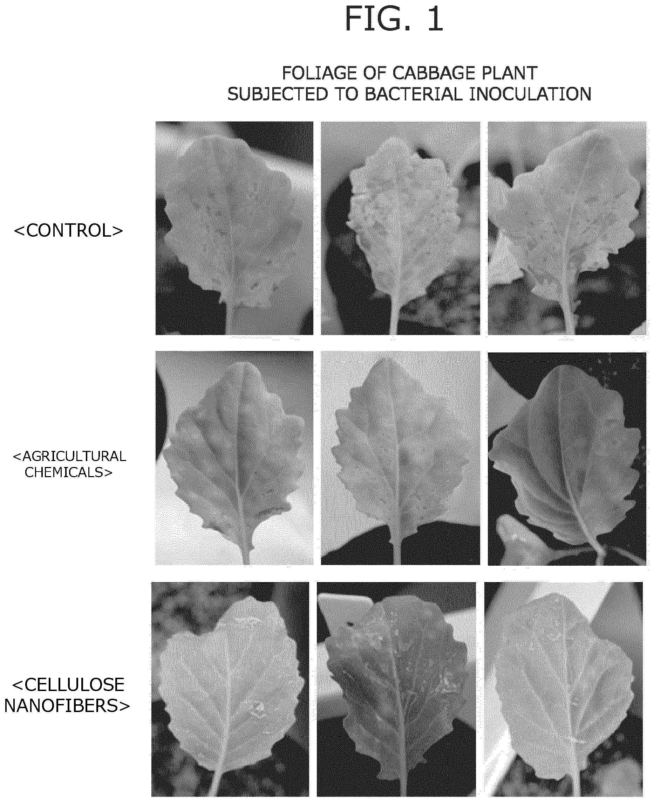

Hereinafter, an embodiment of the present invention will be described with reference to FIG. 1 to FIG. 12.

This embodiment relates to the invention of a plant pathogen control agent that is used to control plant pathogens on plants and contains plant-derived cellulose nanofibers as an active ingredient, in which a surface of a nanofiber-coated layer to be formed by sparging or spraying the plant pathogen control agent onto the foliage or the stems of the plants and then by drying the plant pathogen control agent has hydrophilicity.

<Cellulose Nanofiber>

The "cellulose nanofibers" are a natural material to be a basic skeleton of plant cell walls, such as wood, have a structure in which cellulose molecules are aggregated into the shape of a fiber, and are a fine fibrous substance having a fiber width of less than or equal to 200 nm and an aspect ratio of greater than or equal to 100.

The cellulose nanofibers of this embodiment are a "plant-derived nanofiber material" that is produced from gramineous plants including bamboo or reed, woody plants including broadleaf trees or needleleaf trees, and the like, a "animal-derived nanofiber material" that is produced from marine animal represented by sea squirt, and the like, or a "microbe-derived nanofiber material" that is produced from aerobic fungi or microalgae represented by acetic bacterium, and the like. The cellulose nanofibers may be a nanofiber material in which such a plurality of types are mixed.

The plant-derived nanofiber material may be a material that is produced from sugar cane fibers, seed hair fibers, leaf fibers, seaweeds, and the like, or a material that is produced from crop residues derived from leaves, flowers, stems, roots, exodermis, or the like of the plants such as bagasse, rice straw, tea leaves, and strained lees of fruit juice, in addition to the gramineous plants including the bamboo or the reed, the woody plants including the broadleaf trees or the needleleaf trees, and the like.

Preferably, the plant-derived nanofiber material may be a plant-derived nanofiber material that is produced from gramineous plants, and broadleaf trees or needleleaf trees, and more preferably, the plant-derived nanofiber material may be a plant-derived nanofiber material that is produced from bamboo or needleleaf trees.

The cellulose nanofibers of this embodiment contains pulp having a "$\alpha$-cellulose content ratio" of 60 to 99 mass% as a raw material. The "$\alpha$-cellulose content ratio" can be measured by a known ingredient analysis method, and in the case of a purity of greater than or equal to 60 mass% as described above, the growth environment can be maintained without inhibiting the plant growth due to the decomposition. On the other hand, in a case where the $\alpha$-cellulose content ratio is less than 60 mass%, the properties of natural crystals of cellulose are not sufficiently brought out, and time degradation in storage due to decomposition or the like may occur, and in a case where the $\alpha$-cellulose content ratio is greater than or equal to 99 mass%, it is difficult to defiberate the fibers to the nano level.

Accordingly, preferably, in a case where the "$\alpha$-cellulose content ratio" is 70 to 90 mass%, the defiberation is more efficiently performed, and a material suitable for being sparged to plants can be obtained.

Paper pulp can be used as the pulp from the viewpoint of being easily available and inexpensive, a manufacturing method is not particularly limited, and examples thereof include pulp such as bleached kraft pulp, unbleached kraft pulp, sulfite pulp, soda pulp, thermomechanical pulp, deinking pulp, waste paper pulp, and dissolve pulp. Among them, bleached kraft pulp and unbleached kraft pulp are preferable from the viewpoint of being more easily available.

The cellulose nanofibers of this embodiment have an "average thickness" of 3 to 200 nm, an "average length" of greater than or equal to 0.1 $\mu$m, and a "crystallinity degree" of greater than or equal to 50, and for example, are formed by defiberating cellulose with high-pressure water flow.

The "average thickness" and the "average length" can be measured by using an electronic microscope or the like, a defiberating treatment is performed to the average thickness described above, and thus, a plant pathogen control agent having fluidity and excellent sprayability can be attained. On the other hand, in a case where the average thickness is less than 3 nm, dewaterability may be poor, and it may be difficult to increase a solid content concentration, and in a case where the average thickness is greater than 200 nm, fluidity may decrease, and sprayability may not be excellent.

The "crystallinity degree" can be measured by an X-ray diffraction method or the like, and in a case where the crystallinity degree is greater than or equal to 50, the nanofiber-coated layer to be formed at the time of being sprayed onto the foliage of the plant is further densified, and thus, the infiltration of the plant pathogens from the foliage can be further suppressed. Preferably, in a case where the "crystallinity degree" is greater than or equal to 60, a plant control effect can be further increased.

The cellulose nanofibers of this embodiment have an "average polymerization degree" of 300 to 700 and an "average molecular weight" of 60000 to 110000.

The "average polymerization degree" and the "average molecular weight" can be measured by a measurement method using a copper ethylenediamine solution, or the like, and it is checked that the polymerization degree and the molecular weight are reduced by performing the defiberating treatment, as physical properties of the cellulose nanofibers.

A measurement method of the "average polymerization degree" (hereinafter, a measurement method A) will be described in detail as follows.

In the measurement method A, 0.15 g of cellulose nanofibers was dissolved in 30 mL of a copper ethylenediamine solution of 0.5 M, a viscosity $\eta$ of a cellulose nanofiber-copper ethylenediamine solution was measured by using a Cannon-Fenske kinetic viscosity tube, a limiting viscosity [$\eta$] was obtained on the basis of a JIS standard (JIS P8215:1998), and a polymerization degree DP was calculated from a Mark-Houwink-Sakurada equation described below.

$$Polymerization\ Degree\ DP\ =\ [\eta]/Ka$$

K and a were a characteristic value determined in accordance with the type of high molecules and solvent, and in the case of cellulose dissolved in the copper ethylenediamine solution, K = 0.952 and a = 1 were set.

Note that, in a case where the "average polymerization degree" is measured by a measurement method B described below, the cellulose nanofibers of this embodiment have an "average polymerization degree" of 500 to 900 and an "average molecular weight" of 90000 to 140000.

In the measurement method B, 0.15 g of cellulose nanofibers was dissolved in 30 mL of a copper ethylenediamine solution of 0.5 M, a viscosity $\eta$ of a cellulose nanofiber-copper ethylenediamine solution was measured by using a Cannon-Fenske kinetic viscosity tube, a limiting viscosity $[\eta]$ was obtained from a Schulz-Blaschke equation described below by setting the viscosity of the copper ethylenediamine solution of 0.5 M to $\eta 0$, and a polymerization degree DP was calculated from a Mark-Houwink-Sakurada equation described below.

$$Specific\ Viscosity\ \eta sp\ =\ \eta/\eta 0\ -\ 1$$

$$Limiting\ Viscosity\ [\eta]\ =\ \eta sp/\{c\ (1\ +\ A\ \times\ \eta sp)\}$$

$\eta 0$ is the viscosity of the copper ethylenediamine solution of 0.5M, c is the concentration (g/mL) of the cellulose nanofibers, and A is a characteristic value determined in accordance with the type of solution, and in the case of the copper ethylenediamine solution of 0.5 M, A = 0.28 is obtained.

$$Polymerization\ Degree\ DP\ =\ [\eta]/Ka$$

K and a were a characteristic value determined in accordance with the type of high molecules and solvent, and in the case of cellulose dissolved in the copper ethylenediamine solution, K = 0.57 and a = 1 were set.

The cellulose nanofibers of this embodiment have an "average transmittance at a wavelength of 400 nm" of greater than or equal to 30% and an "average transmittance at a wavelength of 600 nm" of greater than or equal to 70%, in a dispersion liquid containing 0.1 mass% of the cellulose nanofibers.

Note that, the cellulose nanofibers are derived from a natural material and have a comparatively large individual difference, and thus, a predetermined width (for example, ±10%) is provided in order to set the average transmittance.

The "average transmittance" can be measured by using a spectrophotometer, in a dispersion liquid in which the cellulose nanofibers are homogeneously dispersed in water. A cellulose nanofiber dispersion liquid is a transparent liquid in the case of being observed with the naked eye. It is checked that the transmittance is increased and transparency is improved by performing the defiberating treatment, as the physical properties of the cellulose nanofibers.

In the above description, the cost increases as a defiberating degree is high, but the distribution of a fiber thickness is narrowed, and thus, more homogeneous product is obtained. That is, the cellulose nanofiber dispersion liquid is more homogeneously dispersed with respect to an aqueous solvent, and thus, stable physical properties are obtained. In addition, the cellulose nanofiber dispersion liquid can be more homogeneously sprayed even at the time of being sprayed, and thus, the unevenness of the coated layer can be reduced.

Accordingly, in a case where the measurement is performed by the measurement method A, preferably, the "average polymerization degree" may be 400 to 604, the "average molecular weight" may be 65000 to 98000, the "average transmittance at the wavelength of 400 nm" may be 34 to 71%, and the "average transmittance at the wavelength of 600 nm" may be 53 to 90%, excellent sprayability is exhibited even in consideration of the cost, and the coated layer can be homogeneously formed, and thus, a plant pathogen control agent having stable physical properties can be attained.

Note that, in a case where the measurement is performed by the measurement method B, preferably, the "average polymerization degree" may be 607 to 820, and the "average molecular weight" may be 98000 to 133000.

<Manufacturing Method of Cellulose Nanofibers>

A manufacturing method of cellulose nanofibers is mainly divided into two types of a "physically defiberating method" using a high-pressure homogenizer method or a grinder method, an aqueous counter collision method, and the like, and a "chemical treatment method" using a catalytic oxidation method or an acid hydrolysis method using an organic compound TEMPO, a phosphoric acid esterification method, an enzyme treatment method, and the like. Either method can be used, or both methods can be used together by performing the chemical treatment method and then by performing the physically defiberating method.

The cellulose nanofibers of this example are manufactured by the physically defiberating method.

Specifically, the cellulose nanofibers are manufactured by a manufacturing method for performing a "defiberating treatment step" in which high-pressure water collides with polysaccharide formed in a water mixture, and thus, the defiberating treatment is performed.

In the "defiberating treatment step", for example, a homogenization treatment method for treating a dispersion liquid in which polysaccharide is dispersed in a solvent with a homogenizer, and an aqueous counter collision method are exemplified.

In the homogenization treatment method, microfibrillation is performed in which polysaccharide that is fed into the homogenizer at a high pressure is divided by colliding with a wall surface at the time of passing through a narrow gap between orifice plates, and thus, has a homogeneous fiber diameter.

In addition, in the aqueous counter collision method, polysaccharide (a natural cellulose fiber) suspended in water is introduced into two counter nozzles in a chamber, and is injected from the nozzles at a high pressure to collide with each other, and thus, the surface of polysaccharide is subjected to nanofibrillation and is peeled off, and finally, a state close to a dissolved state in which polysaccharide is with respect to water that is a carrier can be obtained. In this method, refinement is performed by cleaving only a mutual interaction between fibers, and thus, the cellulose nanofibers can be obtained in a state in which a decrease in a polymerization degree due to the cleavage is minimized without having a structure change in the cellulose molecules.

The obtained cellulose nanofibers have an average thickness of 3 to 200 nm, an average length of greater than or equal to 0.1 $\mu$m, and six hydroxyl groups in a cellobiose unit.

Note that, as a method for manufacturing the cellulose nanofibers, for example, a method in which high-pressure water of approximately 50 to 400 MPa collides with polysaccharide (a cellulose fiber) suspended in 0.5 to 10 mass% of water by a wet pulverization method of polysaccharides described in JP 2005-270891 A, a counter collision treatment method described in JP 2017-205683 A, a nanofragmented product manufacturing method described in JP 2015-142900 A, and the like can be used. In addition, the cellulose nanofibers can also be obtained by a manufacturing method such as a physical method, a chemical method, an enzyme method, and nata de coco is also a cellulose nanofiber, and thus, can be used.

<Plant Pathogen Control Agent>

The plant pathogen control agent is a liquid type pathogen control agent that is sprayed onto the foliage or the stem of the plant, and thus, form the nanofiber-coated layer (a protective coat) on the foliage or the stem, and mainly contains the "cellulose nanofibers" that are an active ingredient, an "aqueous solvent" for dispersing the cellulose nanofibers, and a "surfactant" for homogeneously dispersing the cellulose nanofibers in the aqueous solvent.

It is desirable that the plant pathogen control agent is a liquid type, but the plant pathogen control agent is not particularly limited, and may be changed to various types such as a paste type, a slurry type, and a gel type.

The "aqueous solvent" is preferably water, but is not particularly limited insofar as being an aqueous solvent. Examples of the aqueous solvent include alcohols, ethers, ketones, N,N-dimethyl formamide, N,N-dimethyl acetamide, and dimethyl sulfoxide. Only one type of the aqueous solvents may be used, or two or more types thereof may be used together.

It is preferable that the "surfactant" is a non-ionic surfactant in order to easily adjust a balance between hydrophilicity and hydrophobicity, but is not particularly limited, and may be an anionic surfactant or a cationic surfactant, an amphoteric surfactant, and the like.

The plant pathogen control agent of this embodiment is prepared such that the content of the "cellulose nanofibers" are 0.01 to 2.0 mass%, and the content of the "surfactant" is 0.01 to 0.5 mass%, with respect to the total mass of the plant pathogen control agent.

Preferably, the plant pathogen control agent may be prepared such that the content of the "cellulose nanofibers" is 0. 01 to 0.1 mass% with respect to the total mass of the plant pathogen control agent.

According to the configuration described above, functionality unique to the plant pathogen control agent can be specialized.

Specifically, the plant pathogen control agent of this embodiment is not for eliminating the plant pathogens but for changing a plant surface such that the plant pathogens are not capable of recognizing the plant surface and the ability to be infiltrated into the plant is deprived from the plant pathogens, and thus, it is sufficient that the nanofiber-coated layer (a coated layer having hydrophilicity) can be formed on the foliage or the stem of the plant, and a control effect can be exhibited even at a comparatively low concentration. For this reason, the cost is also suppressed.

In addition, preferably, the plant pathogen control agent may be prepared such that the content of the "surfactant" is 0.01 to 0.1 mass%.

According to the configuration described above, the cellulose nanofibers can be homogeneously dispersed in the aqueous solvent, amphipathic properties of the cellulose nanofibers can be effectively exhibited, and the infiltration of the plant pathogens from the plant surface can be further suppressed.

The surface of a nanofiber-coated layer to be formed by spraying the plant pathogen control agent of this embodiment onto the foliage or the stem of the plant and then by drying the plant pathogen control agent has hydrophilicity.

That is, surface wax of the foliage or the stem of the plant has hydrophobicity, and a hydrophilic nanofiber-coated layer is formed on the surface of the plant by applying a fine fiber structure unique to the plant-derived cellulose nanofibers and the amphipathic properties, and thus, allows not only the infiltration of the plant pathogens into the plant to be physically suppressed but also the plant pathogens not to recognize the structure or the hydrophobicity of the plant surface such that the plant pathogens intentionally abandon the infiltration into the plant.

Here, the "surface of a nanofiber-coated layer has hydrophilicity" indicates that the nanofiber-coated layer has higher wettability than the foliage (the stem) of the plant, and has properties easily familiar to water.

That is, a contact angle in the case of dropping water onto the nanofiber-coated layer formed on the foliage of the plant may be smaller than a contact angle in the case of directly dropping water onto the foliage of the plant.

Accordingly, a plant disease control effect of the plant pathogen control agent can be exhibited.

Note that, the control effect of the plant pathogen control agent is not particularly limited to the mechanism described above.

The plant pathogen control agent of this embodiment is used to control the plant pathogens on the plants in general, and in particular, "plants" to be an application target and "plant pathogens" to be a control target in which the plant disease control effect can be effectively exhibited are as follows, respectively.

Examples of the "plants" to be an application target include agricultural crops in general, including food crops, forage crops, green manure crops, horticulture crops, and industrial crops. For this reason, the world's food loss can be considerably suppressed.

Preferably, cruciferous plants including cabbage plants and the like, leguminous plants including soybean plants, solanaceous plants including tomato plants or tobacco plants, or rubiaceous plants including coffee tree seedlings are exemplified, and it is checked that a high control effect is obtained.

More preferably, cabbage plants, soybean plants, tomato plants, tobacco plants, or coffee tree seedlings are exemplified.

Examples of the "plant pathogens" to be a control target include causative bacterium, rust fungi, or pathogenic fungi. Note that, in the plant pathogens, there are causative bacterium, rust fungi, and pathogenic fungi that recognize the structure or the hydrophobicity of the plant surface, and recognize natural apertures such as pores in the foliage of the plant and are infiltrated therefrom, and there are also filamentous fungi that are directly infiltrated from a cuticular layer of the plant surface.

Preferably, examples of the "causative bacterium" include Pseudomonas bacterium including Pseudomonas syringae pv. tomato, Pseudomonas cannabina pv. maculicola, Pseudomonas syringae pv. tabaci, and Pseudomonas syringae pv. glycinea, Xanthomonas bacterium including Pseudomonas cannabina pv. glycinea, Pectobacterium bacterium, Agrobacterium bacterium, or Clavibacter bacterium.

More preferably, examples of agriculturally important causative bacterium include Pseudomonas cannabina pv. maculicola, Pseudomonas syringae pv. tabaci, Pseudomonas syringae pv. glycinea, or Pseudomonas syringae pv. tomato, and it is checked that a high control effect is obtained.

Preferably, examples of the "rust fungi" include Phakopsora rust fungi including Phakopsora pachyrhizi, Hemileia rust fungi including Hemileia vastatrix, and Puccinia rust fungi including Puccinia graminis and Puccinia recondita.

More preferably, examples of agriculturally important causative bacterium include Phakopsora pachyrhizi, Hemileia vastatrix, Puccinia graminis, or Puccinia recondita, and it is checked that a high control effect is obtained.

Preferably, examples of the "pathogenic fungi" include an Aphanomyces genus including oomycota, a Phytophthora genus including phytophthora, a Pythium genus, an Albugo genus including white rust, a Pernospora genus including Dawny mildew, a Pseudopernospora genus, a Plasmopara genus, a Rhizopus genus including zygomycete, a Choanephora genus, a Taphrina genus including Ascomycotina, a Blumeria genus including powdery mildew, a Cystotheca genus, an Erysiphe genus, a Golovinomyces genus, a Phyllactinia genus, a Podosphaera genus, a Sawadaea genus, an Oidiopsis genus, a Ceratocystis genus, a Bionectria genus, a Calonectria genus, a Claviceps genus, a Gibberella genus, a Haematonectria genus, a Heteroepichloë genus, a Nectria genus, a Neonectria genus, a Pleonectria genus, a Pseudonectria genus, a Rugonectria genus, a Glomerella genus including Glomerella acutata, a Cryphonectria genus, a Diaporthe genus, a Gnomonia genus, a Leucostoma genus, a Melamconis genus, a Pseudovalsa genus, a Valsa genus, a Botryotinia genus including Lambertella corni-maris, a Ciborina genus, a Grovesinia genus, a Monilinia genus, an Ovulinia genus, a Sclerotinia genus, a Rosellinia genus including Rosellinia necatrix, a Rhytisma genus including Rhytisma polaris, a Botryosphaeria genus including other Ascomycotina, a Cochliobolus genus, a Didymella genus, a Diplocarpon genus, an Elsinoë genus, a Guignardia genus, a Monosporascus genus, a Mycosphaerella genus, a Pestalosphaeria genus, a Phomatospora genus, a Venturia genus, a Helicobasidium genus including basidiomycetes and Helicobasidium mompa Tanaka, a Graphiola genus including Ustilago maydis, a Tilletia genus, a Urocystis genus, a Ustilago genus, an Exobasidium genus including Exobasidium vaccinii, an Aecidium genus including rust fungi, a Blastospora genus, a Coleosporium genus, a Cronarium genus, a Gymnosporangium genus, a Melampsora genus, a Nyssopsora genus, a Phakospora genus, a Phragmidium genus, a Pileolaria genus, a Puccinia genus, a Stereostratum genus, a Uromyces genus, an Apiocarpella genus including pycnidium fungi of Deuteromycetes, an Ascochyta genus, a Lasiodiplodia genus, a Macrophomina genus, a Phoma genus, a Phomopsis genus, a Phyllostica genus, a Pyrenochaeta genus, a Septoria genus, a Sphaeropsis genus, a Stagonospora genus, a Tubakia genus, an Asteroconium genus including conidial fungi, a Colletotrichum genus, a Cylindrosporium genus, an Entomosporium genus, a Marssonina genus, a Pestalotiopsis genus, a Seiridium genus, a Sphaceloma genus, an Alternaria genus including Hyphomycetes, an Aspergillus genus, a Botrytis genus, a Corynespora genus, a Curvularia genus, a Cylindrocarpon genus, a Fusarium genus, a Gonatobotryum genus, a Haradamyces genus, a Penicillium genus, a Plectosporium genus, a Pyricularia genus, a Stemphylium genus, a Verticillium genus, a Zygophiala genus, a Cercospora genus, a Cladosporium genus, a Corynespora genus, a Passalora genus, a Pseudocercospora genus, a Pseudocercospolla genus, a Rhizoctonia genus including Myceliasterilia, a Sclerotium genus, or pathogenic fungi of such genera.

It is said that approximately 70 to 80% of plant diseases are caused by pathogenic fungi, and the control effect of the plant pathogen control agent according to the present invention can be expected.

The plant pathogen control agent of this embodiment contains the cellulose nanofibers as an active ingredient, and thus, a plant growth promotion effect can also be exhibited in addition to the control effect of the plant disease with respect to the plant.

For example, an effect is checked in which the plant pathogen control agent that is attached onto the surface of the plant by being sprayed to the plant is infiltrated into the earth by rain or the like, and is degraded into sugar, an acetic acid, and the like by a degrading enzyme in the earth, such as cellulase, and thus, a microbe distribution of the earth is adjusted to a desirable environment for plant growth.

[Example]

Hereinafter, examples of the plant pathogen control agent of the present invention will be described in detail. Note that, the present invention is not limited to these examples.

<Example 1>

Cellulose nanofibers refined from bamboo (nanoforest-S (bamboo bleached pulp), manufactured by Chuetsu Pulp & Paper Co., Ltd., an average polymerization degree of 530, an average molecular weight of 86000, and an average transmittance at a wavelength of 400 nm/600 nm of 51%/67%) were used.

The cellulose nanofibers were diluted with water to have a predetermined concentration, and a non-ionic surfactant (a product corresponding to Tween20 manufactured by Imperial Chemical Industries Ltd., manufactured by Wako Pure Chemical Industries, Ltd.) was added thereto, and thus, a cellulose nanofiber dispersion liquid was prepared. The dispersion liquid was used as a plant pathogen control agent.

Note that, the average polymerization degree and the average molecular weight described above are measured by the measurement method A, and the average polymerization degree is 751 and the average molecular weight is 122000 in the case of being measured by the measurement method B.

<Example 2>

Cellulose nanofibers refined from bamboo (nanoforest-S (bamboo bleached pulp), manufactured by Chuetsu Pulp & Paper Co., Ltd., a crystallinity degree of 56, an average polymerization degree of 430, an average molecular weight of 70000, and an average transmittance at an wavelength of 400 nm/600 nm of 61%/80%) were used.

The cellulose nanofibers were prepared as with Example 1, and thus, a cellulose nanofiber dispersion liquid was obtained. The dispersion liquid was used as a plant pathogen control agent.

Note that, the cellulose nanofiber dispersion liquid is a dispersion liquid that is obtained by a high defiberating treatment compared to Example 1, and has a more homogeneous fiber thickness.

Note that, the average polymerization degree and the average molecular weight described above are measured by the measurement method A, and the average polymerization degree is 644 and the average molecular weight is 104000 in the case of being measured by the measurement method B.

<Example 3>

Cellulose nanofibers refined from needleleaf trees (nanoforest-S (needleleaf trees bleached pulp), manufactured by Chuetsu Pulp & Paper Co., Ltd., an average polymerization degree of 545, an average molecular weight 88000, and an average transmittance at a wavelength of 400 nm/600 nm of 44%/63%) were used.

The cellulose nanofibers were prepared as with Example 1, and thus, a cellulose nanofiber dispersion liquid was obtained. The dispersion liquid was used as a plant pathogen control agent.

Note that, the average polymerization degree and the average molecular weight described above are measured by the measurement method A, and the average polymerization degree is 766 and the average molecular weight is 124000 in the case of being measured by the measurement method B.

<Example 4>

Cellulose nanofibers refined from needleleaf trees (nanoforest-S (needleleaf trees bleached pulp), manufactured by Chuetsu Pulp & Paper Co., Ltd., a crystallinity degree of 64, an average polymerization degree of 400, an average molecular weight of 65000, and an average transmittance at a wavelength of 400 nm/600 nm of 53%/75%) were used.

The cellulose nanofibers were prepared as with Example 1, and thus, a cellulose nanofiber dispersion liquid was obtained. The dispersion liquid was used as a plant pathogen control agent.

Note that, the cellulose nanofiber dispersion liquid is a dispersion liquid that is obtained by a high defiberating treatment compared to Example 3, and has a more homogeneous fiber thickness.

Note that, the average polymerization degree and the average molecular weight described above are measured by the measurement method A, and the average polymerization degree is 607 and the average molecular weight is 98000 in the case of being measured by the measurement method B.

<Example 5>

Cellulose nanofibers refined from bamboo (nanoforest-S (bamboo bleached pulp), manufactured by Chuetsu Pulp & Paper Co., Ltd., a crystallinity degree of 61, an average polymerization degree of 604, an average molecular weight of 98000, and an average transmittance at a wavelength of 400 nm/600 nm of 57%/74%) were used.

The cellulose nanofibers were prepared as with Example 1, and thus, a cellulose nanofiber dispersion liquid was obtained. The dispersion liquid was used as a plant pathogen control agent.

Note that, the cellulose nanofiber dispersion liquid is a dispersion liquid that is obtained by an extremely low defiberating treatment compared to Example 1.

Note that, the average polymerization degree and the average molecular weight described above are measured by the measurement method A, and the average polymerization degree is 820 and the average molecular weight is 133000 in the case of being measured by the measurement method B.

<Example 6>

Cellulose nanofibers refined from needleleaf trees (nanoforest-S (needleleaf trees bleached pulp), manufactured by Chuetsu Pulp & Paper Co., Ltd., a crystallinity degree of 63, an average polymerization degree of 510, an average molecular weight of 83000, and an average transmittance at a wavelength of 400 nm/600 nm of 48%/65%) were used.

The cellulose nanofibers were prepared as with Example 1, and thus, a cellulose nanofiber dispersion liquid was obtained. The dispersion liquid was used as a plant pathogen control agent.

Note that, the cellulose nanofiber dispersion liquid is a dispersion liquid that is obtained by an extremely low defiberating treatment compared to Example 3.

Note that, the average polymerization degree and the average molecular weight described above are measured by the measurement method A, and the average polymerization degree is 730 and the average molecular weight is 118000 in the case of being measured by the measurement method B.

<Test 1: Pathogen Control Effect on Cabbage Plants>

A test for checking a pathogen control effect on cabbage plants by using the plant pathogen control agents of Examples 1 to 4 was performed in the following procedures.

In this test, cabbage plants (Seed: Kinkei No. 201) grown in horticultural soil (Genkikun Cell-Dedicated Soil Co-op N-150, manufactured by Katakura & Co-op Agri Corporation) were used as "test plants". In addition, Pseudomonas cannabina pv. maculicola was used as "plant pathogens".

In addition, as shown in Table 1 described below, the plant pathogen control agents of Examples 1 to 4 were prepared such that the content of the cellulose nanofibers was 0.01 mass%, 0.03 mass%, and 0.1 mass%, and the content of the surfactant was 0.01 mass%.

[Table 1]

|  | Derived substance | Defiberating treatment |
|---|---|---|
| Example 1 | Bamboo | Low defiberation |
| Example 2 | | High defiberation |
| Example 3 | Needleleaf trees | Low defiberation |
| Example 4 | | High defiberation |

<Test 1-1: "State of Foliage" of Cabbage Plants>

The plant pathogen control agent was homogeneously sprayed onto the foliage (both the surface and the back) of cabbage plants cultivated for 3 to 4 weeks after sowing (a second true leaf stage) by using a hand spray (a "cellulose nanofiber group"). In addition, the foliage onto which water was homogeneously sprayed instead of the plant pathogen control agent was prepared as a "control group", and the foliage onto which 100-fold diluted water of probenazole (Product Name: Oryzemate (Registered Trademark), manufactured by Meiji Co., Ltd.) was homogeneously sprayed was also prepared as an "agricultural chemical group".

$10^8$ cfu/mL of Pseudomonas cannabina pv. maculicola was prepared after 1 hour from the spray with respect to the foliage, and dip inoculation was performed with respect to the foliage.

Then, the "state of the foliage" of the cabbage plants after 5 days from the inoculation of Pseudomonas cannabina pv. maculicola was compared with the control group and the agricultural chemical group.

The results of this test are shown in FIG. 1. Note that, the plant pathogen control agent of Example 1 (0.1 mass% of the cellulose nanofibers) was shown as a representative example of the "cellulose nanofiber group".

From the test results of FIG. 1, in the leaves of the cabbage plants after 5 days from the inoculation of Pseudomonas cannabina pv. maculicola, infection with Xanthomonas campestris pv. nigromaculans accompanied by necrosis and chlorosis was checked in the "control group" in which water was sprayed. On the other hand, in the "agricultural chemical group", slight necrosis and chlorosis were checked, but the infection with Xanthomonas campestris pv. nigromaculans was not checked. In addition, in the "cellulose nanofiber group" of Examples 1 to 4, only slight chlorosis was checked, and the infection with Xanthomonas campestris pv. nigromaculans was not checked.

<Test 1-2: "Number of Bacterium of Foliage" of Cabbage Plants>

In addition, the "number of bacterium of the foliage" of the cabbage plants after 5 days from the inoculation of Pseudomonas cannabina pv. maculicola was measured, and a "disease control ratio" was calculated.

Specifically, a diseased leaf sample obtained by sterilizing the surface of the diseased leaf with hydrogen peroxide water of 5%, by washing the leaf with sterilized water, and then, by grinding the leaf was gradually diluted with sterilized water, was allowed to grow in a bacterial culture medium, and thus, a colony of bacterium was measured. The number of bacterium was measured as a colony forming unit (CFU) per the mass of the diseased leaves. In addition, the cellulose nanofiber group was compared with the agricultural chemical group and the control group. The measurement was performed at N = 3.

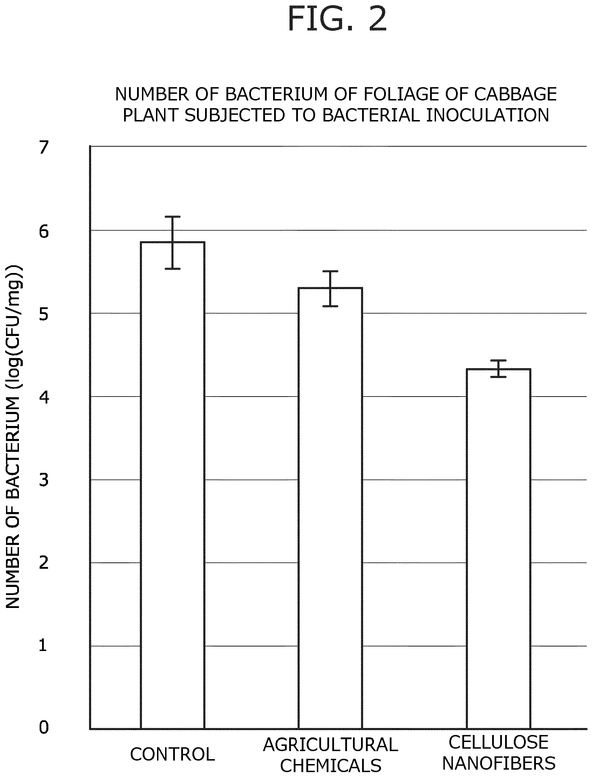

The results of this test are shown in FIG. 2. Note that, the plant pathogen control agent of Example 1 (0.1 mass% of the cellulose nanofibers) was shown as a representative example of the "cellulose nanofiber group".

From the test results of FIG. 2, in the number of bacterium of Pseudomonas cannabina pv. maculicola in the cabbage plants, it was checked that the number of bacterium of the "cellulose nanofiber group" was reduced to approximately 1/30 of the number of bacterium of the "control group".

<Test 1-3: "Disease Control Ratio of Foliage" of Cabbage Plants>

In addition, a "disease index of the foliage" of the cabbage plants after 5 days from the inoculation of Pseudomonas cannabina pv. maculicola was calculated, and a "disease control ratio of the foliage" was further calculated from the disease index.

The disease index was set to "0: No Blotches", "1: Blotches of Less than or Equal to 10%", "2: Blotches of Approximately 10 to 50%", "3: Blotches of Approximately 50%, Accompanied by Chlorosis", "4: Blotches of Approximately 80%, Accompanied by Chlorosis", and "5: All Are Withered", and eight leaves of four plants (two leaves per one plant) were set to a disease index calculation target in each group. Disease Index of "Cellulose Nanofiber Group"/Disease Index of "Control Group" was calculated, and the "disease control ratio" was further calculated.

As shown in Table 1 described above, not only the "control group" but also the "cellulose nanofiber group" to which the surfactant was not added was set to a comparison target.

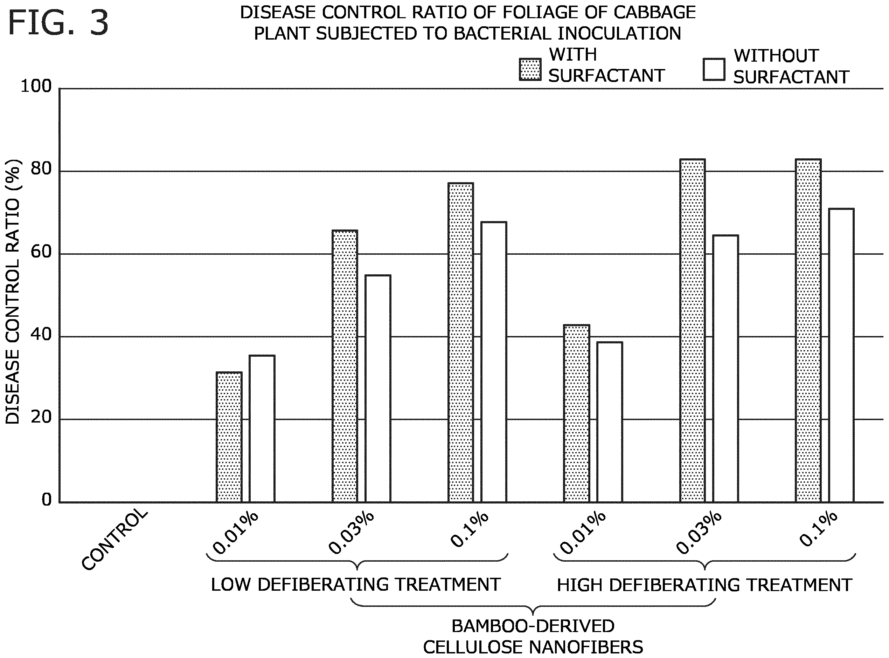

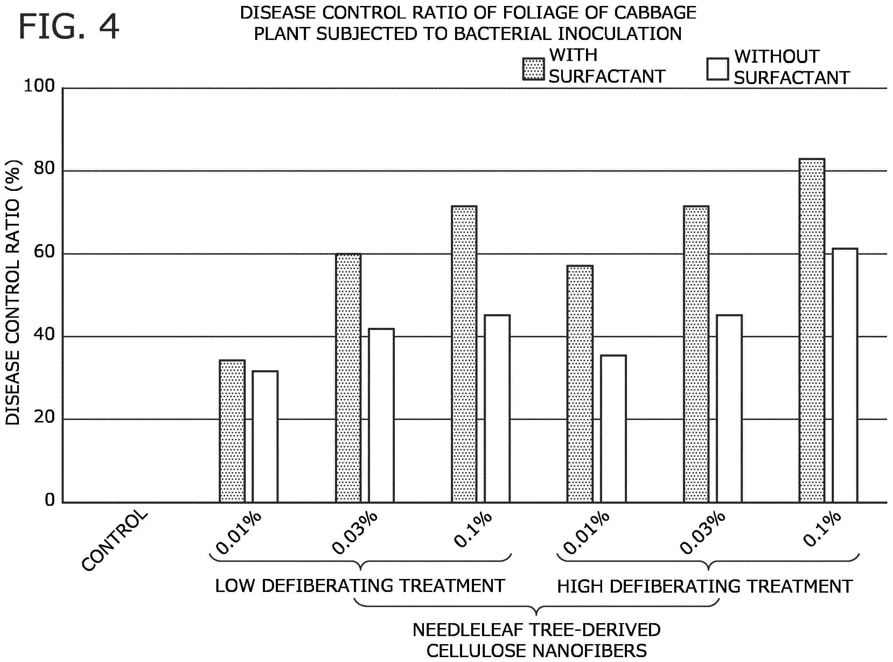

The results of this test are shown in FIG. 3 and FIG. 4.

From the test results of FIG. 3 and FIG. 4, in the entire "cellulose nanofiber group", it was checked that the disease control ratio of approximately greater than or equal to 30% was obtained compared to the "control group".

In the comparison focusing on the "concentration" of the cellulose nanofiber group, it was found that a high disease control ratio was obtained as the content of the cellulose nanofibers was high.

In addition, in the comparison focusing on the "defiberating treatment" of the cellulose nanofiber group, it was found that a higher disease control ratio was obtained in a high defiberating treatment than in a low defiberating treatment.

In addition, in the comparison focusing on the "presence or absence of the surfactant" of the cellulose nanofiber group, it was found that a high disease control ratio was obtained in a case where the surfactant was added.

In addition, in the comparison focusing on the "derived substance" of the cellulose nanofiber group, it was found that a higher disease control ratio was obtained in bamboo-derived cellulose nanofibers than in needleleaf tree-derived cellulose nanofibers.

<Test 2: Pathogen Control Effect on Soybean Plants "State of Foliage">

A test for checking a pathogen control effect on soybean plants by using the bamboo-derived plant pathogen control agent of Example 2 was performed.

In this test, soybean plants (Seed: Enrei) grown in the same horticultural soil as that of Test 1 (Genkikun Cell-Dedicated Soil Co-op N-150, manufactured by Katakura & Co-op Agri Corporation) were used as "test plants", and Pseudomonas syringae pv. glycinea and urediniospores of Phakopsora pachyrhizi were used as "plant pathogens".

In addition, the bamboo-derived plant pathogen control agent of Example 2 was prepared such that the content of the cellulose nanofibers was 0.1 mass% and the content of the surfactant was 0.01 mass%.

Specifically, the plant pathogen control agent was homogeneously sprayed onto the foliage (both the surface and the back) of soybean plants cultivated for 3 to 4 weeks after sowing (a second true leaf stage) by using a hand spray (a cellulose nanofiber group). In addition, the foliage onto which water was homogeneously sprayed instead of the plant pathogen control agent was prepared as a control group.

$10^8$ cfu/mL of Pseudomonas syringae pv. glycinea and $10^8$ pieces/mL of the urediniospores of Phakopsora pachyrhizi were prepared after 1 hour from the spray with respect to the foliage, and spray inoculation was performed with respect to the foliage.

Then, each state of the foliage of the soybean plants after 6 days from the inoculation of Pseudomonas syringae pv. glycinea and after 10 days from the inoculation of Phakopsora pachyrhizi was compared with the control group.

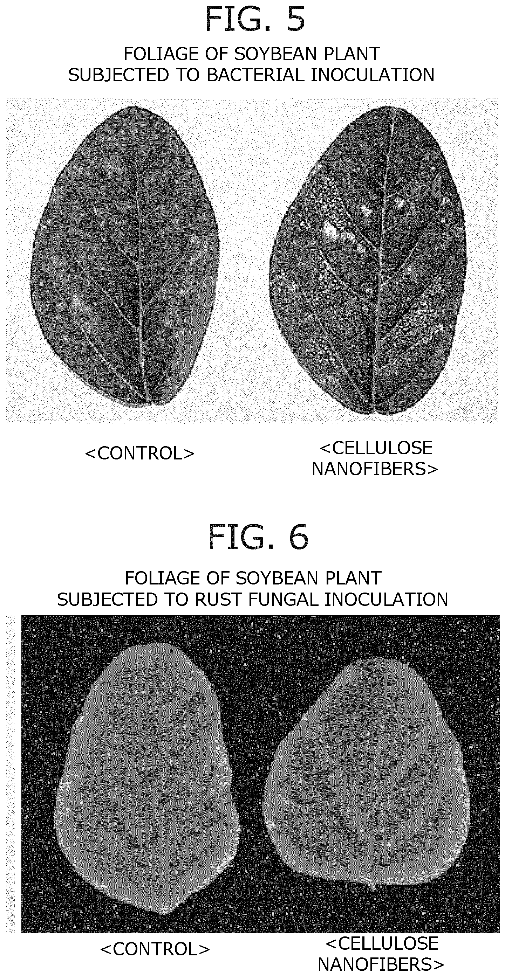

The results of this test are shown in FIG. 5 and FIG. 6.

As shown in FIG. 5, in the leaves of the soybean plants after 6 days from the inoculation of Pseudomonas syringae pv. glycinea, infection with Xanthomna campestris accompanied by chlorosis was checked in the control group in which water was sprayed. On the other hand, in the cellulose nanofiber group, only slight chlorosis was checked.

In addition, as shown in FIG. 6, in the leaves of the soybean plants after 10 days from the inoculation of Phakopsora pachyrhizi, infection with a rust disease accompanied by chlorosis was checked in the control group in which water was sprayed. On the other hand, in the cellulose nanofiber group, only slight chlorosis was checked.

<Test 3: Pathogen Control Effect on Tomato Plants "State of Foliage">

A test for checking a pathogen control effect on tomato plants by using the bamboo-derived plant pathogen control agent of Example 2 was performed.

In this test, tomato plants (Seed: Glamour) grown in the same horticultural soil as that Test 1 were used as "test plants", and Pseudomonas syringae pv. tomato was used as "plant pathogens".

In addition, the plant pathogen control agent of Example 2 prepared such that the content of the cellulose nanofibers was 0.1 mass% and the content of the surfactant was 0.01 mass%.

Specifically, the plant pathogen control agent was homogeneously sprayed onto the foliage (both the surface and the back) of tomato plants cultivated for 4 to 5 weeks after sowing by using a hand spray (a cellulose nanofiber group). In addition, the foliage onto which water was homogeneously sprayed instead of the plant pathogen control agent was prepared as a control group.

$10^8$ cfu/mL of Pseudomonas syringae pv. tomato was prepared after 1 hour from the spray with respect to the foliage, and spray inoculation was performed with respect to the foliage.

Then, the state of the foliage of the tomato plants after 7 days from the inoculation of Pseudomonas syringae pv. tomato was compared with the control group.

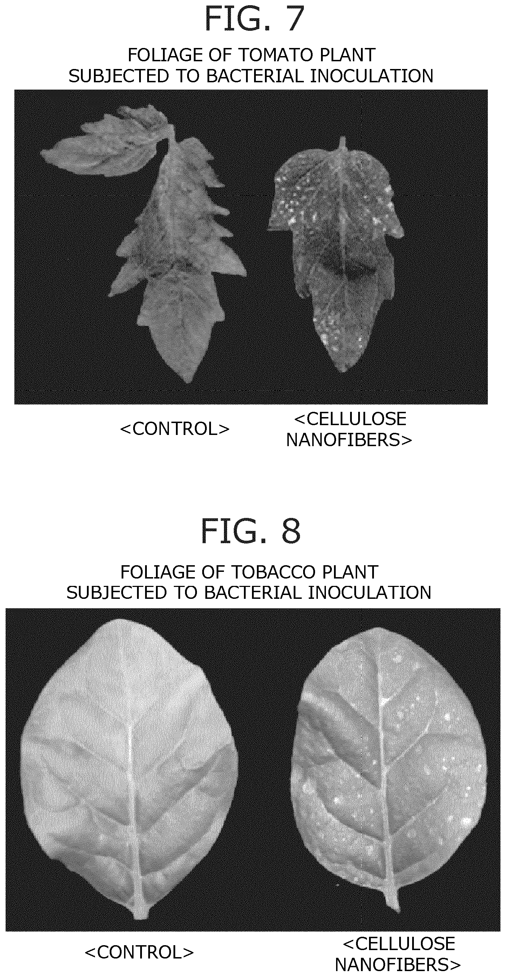

The results of this test are shown in FIG. 7.

In the leaves of the tomato plants after 7 days from the inoculation of Pseudomonas syringae pv. tomato, infection with Pseudomonas syringae accompanied by necrosis and chlorosis was checked in the control group in which water was sprayed. On the other hand, in the cellulose nanofiber group, only slight chlorosis was checked.

<Test 4: Pathogen Control Effect on Tobacco Plants "State of Foliage">

A test for checking a pathogen control effect on tobacco plants by using the bamboo-derived plant pathogen control agent of Example 2 was performed.

In this test, tobacco plants (Seed: Xanthi) grown in the same horticultural soil as that of Test 1 were used as "test plants", and Pseudomonas syringae pv. tabaci was used as "plant pathogens".

In addition, the plant pathogen control agent of Example 2 was prepared such that the content of the cellulose nanofibers was 0.1 mass% and the content of the surfactant was 0.01 mass%.

Specifically, the plant pathogen control agent was homogeneously sprayed onto the foliage (both the surface and the back) of tobacco plants cultivated for 4 to 5 weeks after sowing by using a hand spray (a cellulose nanofiber group). In addition, the foliage onto which water was homogeneously sprayed instead of the plant pathogen control agent was prepared as a control group.

$10^8$ cfu/mL of Pseudomonas syringae pv. tabaci was prepared after 1 hour from the spray with respect to the foliage, and spray inoculation was performed with respect to the foliage.

Then, the state of the foliage of the tobacco plants after 7 days from the inoculation of Pseudomonas syringae pv. tabaci was compared with the control group.

The results of this test are shown in FIG. 8.

In the leaves of the tobacco plants after 7 days from the inoculation of Pseudomonas syringae pv. tabaci, infection with wildfire disease accompanied by chlorosis was checked in the control group in which water was sprayed. On the other hand, in the cellulose nanofiber group, only slight chlorosis was checked.

<Test 5: Pathogen Control Effect on Coffee Tree Seedlings "State of Foliage">

A test for checking a pathogen control effect on coffee tree seedlings by using the plant pathogen control agents of Examples 2 and 4 was performed. Note that, Example 2 is the bamboo-derived plant pathogen control agent and Example 4 is the needleleaf tree-derived plant pathogen control agent.

In this test, coffee tree seedlings (Seed: Robusta) grown in a greenhouse for 4 to 5 months after sowing were used as "test plants", and Hemileia vastatrix was used as "plant pathogens".

In addition, each of the plant pathogen control agents of Examples 2 and 4 was prepared such that the content of the cellulose nanofibers was 0.1 mass% and the content of the surfactant was 0.01 mass%.

Specifically, the plant pathogen control agent was homogeneously sprayed onto the foliage (both the surface and the back) of coffee tree seedlings cultivated for 4 to 5 weeks after sowing by using a hand spray (a cellulose nanofiber group) . In addition, the foliage onto which water was homogeneously sprayed instead of the plant pathogen control agent was prepared as a control group.

$10^6$ pieces/mL of the urediniospores of Hemileia vastatrix were prepared after 3 hours from the spray with respect to the foliage, and spray inoculation was performed with respect to the foliage.

Then, the state of the foliage of the coffee tree seedlings after 10 days from the inoculation of Hemileia vastatrix was compared with the control group.

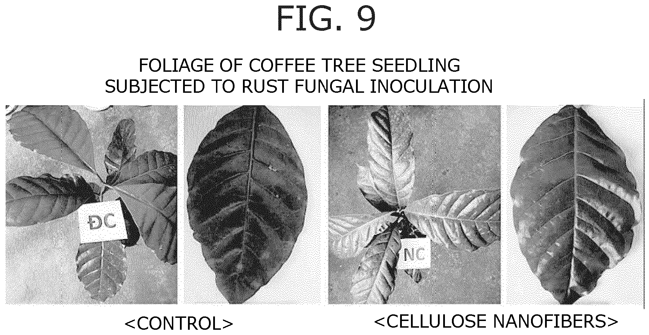

The results of this test are shown in FIG. 9. Note that, the plant pathogen control agent of Example 2 was shown as a representative example of the "cellulose nanofiber group".

In the leaves of the coffee tree seedlings after 10 days from the inoculation of Hemileia vastatrix, infection with a rust disease was checked in the control group in which water was sprayed. On the other hand, in the cellulose nanofiber group of both of Example 2 and Example 4, the infection with the rust disease was not checked.

<Test 6: Pathogen Control Effect on Soybean Plants "Number of Blotches of Foliage">

A test for checking a change in the number of blotches of the foliage of the soybean plants at the time of using the plant pathogen control agents of Examples 1 to 6 was performed.

In this test, soybean plants (Seed: Enrei) grown in the same horticultural soil as that of Test 1 were used as "test plants", and urediniospores of Phakopsora pachyrhizi were used as "plant pathogens".

In addition, as shown in Table 2 described below, the plant pathogen control agents of Examples 1 to 6 were prepared such that the content of the cellulose nanofibers was 0.1 mass% and the content of the surfactant was 0.01 mass%.

[Table 2]

|  | Derived substance | Defiberating treatment |
|---|---|---|
| Example 1 | Bamboo | Low defiberation |
| Example 2 | | High defiberation |
| Example 3 | Needleleaf trees | Low defiberation |
| Example 4 | | High defiberation |
| Example 5 | Bamboo | Extremely low defiberation |
| Example 6 | Needleleaf trees | |

The plant pathogen control agent was homogeneously sprayed onto foliage (the surface) of soybean plants developed to the fourth leaf by using a hand spray, and was dried (a cellulose nanofiber group). In addition, the foliage onto which water was homogeneously sprayed instead of the plant pathogen control agent was prepared as a control group.

$10^5$ pieces/mL of the urediniospores of Phakopsora pachyrhizi was prepared after drying, and spray inoculation was performed with respect to the foliage.

Then, the number of blotches generated in the second foliage to the fourth foliage of the soybean plants after 10 days from the inoculation of Phakopsora pachyrhizi was measured per 1 cm$^2$. In addition, the cellulose nanofiber group was compared with the control group. The measurement was performed at N = 3.

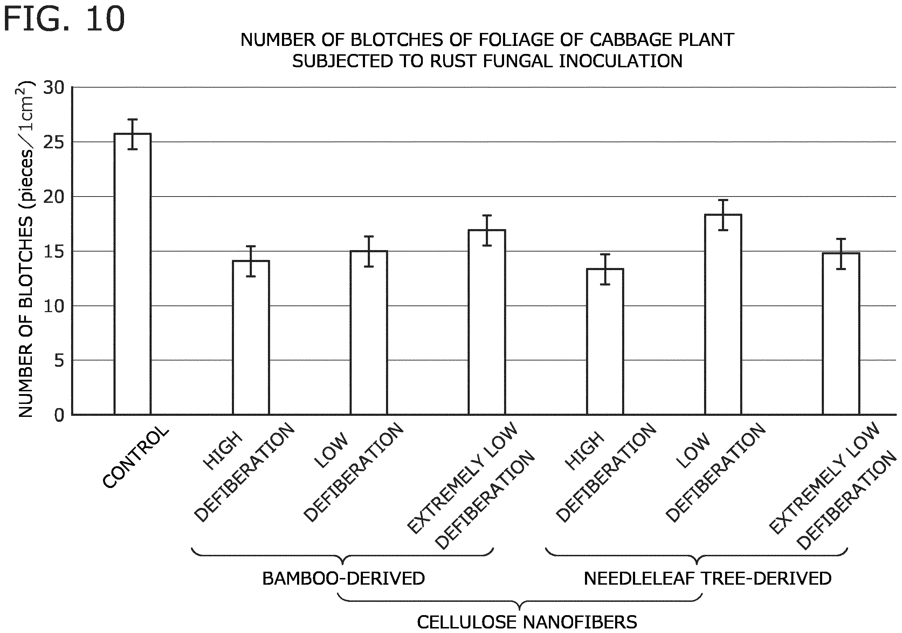

The results of this test are shown in FIG. 10.

From the test results of FIG. 10, in the "control group", approximately 25 blotches were observed per 1 cm$^2$, whereas in the entire "cellulose nanofiber group", 20 or less blotches were observed per 1 cm$^2$.

In addition, in the comparison focusing on the "defiberating treatment" of the cellulose nanofiber group, it was indicated that the number of blotches was further reduced in a high defiberating treatment than in a low defiberating treatment.

From the results described above, in the examples of the entire cellulose nanofiber group, it was checked that the number of blotches of the rust fungi was significantly reduced compared to the control group.

<Test 7: pathogen Control Effect on Cabbage Plants "Transformation of Foliage">

A test for checking the transformation of the foliage of cabbage plants at the time of using the plant pathogen control agent of Example 2 was performed.

In this test, cabbage plants (Seed: Kinkei No. 201) grown in the same horticultural soil as that in Test 1 were used as "test plants", and Pseudomonas cannabina pv. maculicola was used as "plant pathogens".

In addition, the plant pathogen control agent of Example 2 was prepared such that the content of the cellulose nanofibers was 0.1 mass% and the content of the surfactant was 0.01 mass%.

Specifically, the foliage (the surface) of cabbage plants developed to the second leaf onto which the plant pathogen control agent was sprayed and dried (a cellulose nanofiber group) and the foliage onto which water was sprayed (a control group) were prepared, and each state of the foliage was subjected to comparative observation with a scanning atom microscope.

After that, $10^8$ cfu/mL of Pseudomonas cannabina pv. maculicola labeled with fluorescent protein was prepared, and dip inoculation was performed with respect to the foliage. Then, the state of the foliage of the cabbage plants after the inoculation of Pseudomonas cannabina pv. maculicola was subjected to comparative observation with a confocal laser microscope.

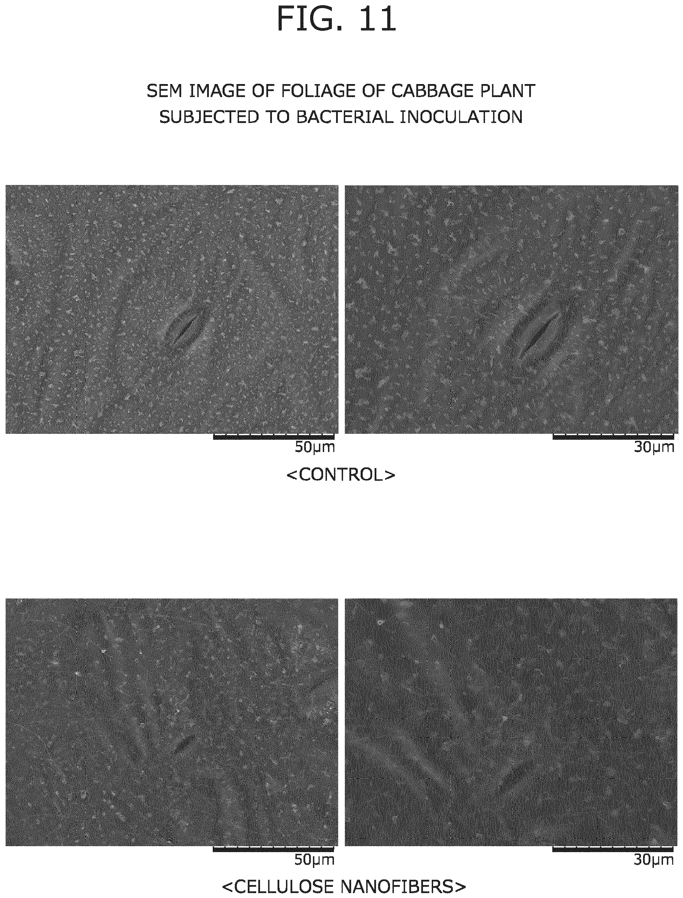

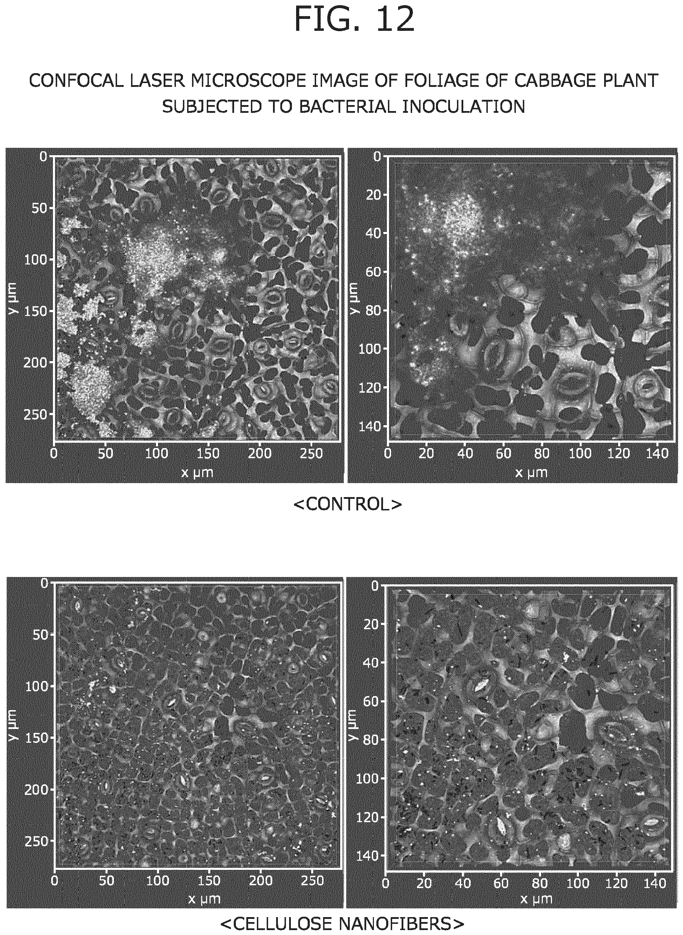

The results of this test were shown in FIG. 11 and FIG. 12.

From the test results of FIG. 11, in the "cellulose nanofiber group", a plurality of cellulose nanofibers (fibrous substances) were observed on the foliage of the plant. In a stomatal aperture of the foliage, it was observed that the surface of the stomatal aperture of the foliage was covered with the cellulose nanofibers in a cancellate shape (a branched shape), and it was observed that at least a part of the stomatal aperture of the foliage was physically blocked by the cellulose nanofibers.

The stomatal aperture of the plant, shown in FIG. 11, has a width of approximately 3 $\mu$m and a length of approximately 12 $\mu$m. On the other hand, a general size of bacterium to be the pathogenesis of disease is approximately 1 to 2 $\mu$m. It was indicated that the cellulose nanofibers were a fiber having an average thickness of 3 to 200 nm, and thus, did not completely block the surface of the stomatal aperture of the plant, but covered the surface of the stomatal aperture in a cancellate shape (a branched shape), and therefore, the size of the void of the stomatal aperture to be an infiltration path of bacterium was reduced into a cancellate shape. In addition, it was indicated that the surface of the stomatal aperture was covered in a cancellate shape (a branched shape), and thus, the infiltration of the bacterium was prevented while the passing of gas such as oxygen or carbon dioxide, and moisture vapor was maintained, which was the function of the pores of the plant, necessary for plant growth.

Note that, separately from this test, it is checked that even in a case where the plant pathogen control agent is sprayed to the plant, the growth of the plant is not inhibited.

From the test results of FIG. 12, in the "cellulose nanofiber group", it was observed that a plurality of bacterium were attached to the foliage of the plant, compared to the "control group".

For this reason, it was indicated that a nanofiber-coated layer was formed on the foliage of the plant, and the nanofiber-coated layer allowed the bacterium not to recognize the structure or the hydrophobicity of a plant surface such that the bacterium intentionally abandoned the infiltration into the plant.

In addition, in the "cellulose nanofiber group", membrane substances were observed in a part of the stomatal aperture of the foliage. For this reason, it was indicated that the cellulose nanofibers physically blocked a part of the pore of the foliage.

From the test results described above, an effect of controlling plant pathogens by sparging or spraying the plant pathogen control agent containing the cellulose nanofibers as an active ingredient to the plant was checked.

**Claims**

1. Use of cellulose nanofibers for controlling plant pathogens on plants.

2. A method for controlling plant pathogens on plants by using cellulose nanofibers.

3. The use according to claim 1 or the method according to claim 2,
   wherein the plant pathogens to be a target are causative bacterium selected from the group consisting of Pseudomonas bacterium, Xanthomonas bacterium, Pectobacterium bacterium, Agrobacterium bacterium, and Clavibacter bacterium.

4. The use according to claim 1 or 3, or the method according to claim 2 or 3,
   wherein the plant pathogens to be a target are rust fungi selected from the group consisting of Phakopsora rust fungi, Hemileia rust fungi, and Puccinia rust fungi, or pathogenic fungi.

5. The use according to any one of claims 1, 3 and 4, or the method according to any one of claim 2 to 4,
   wherein the plants to be a target are plants selected from the group consisting of cruciferous plants, leguminous plants, solanaceous plants, and rubiaceous plants.

6. The use according to any one of claims 1, and 3 to 5, or the method according to any one of claim 2 to 5,
   wherein a surface of a nanofiber-coated layer to be formed by applying the cellulose nanofibers contained in a plant pathogen control agent as an active ingredient onto foliage or stems of the plants and then by drying the plant pathogen control agent has hydrophilicity.

7. The use according to any one of claims 1, and 3 to 6, or the method according to any one of claim 2 to 6,
   wherein the nanofiber-coated layer to be formed by applying the cellulose nanofibers contained in a plant pathogen control agent as an active ingredient onto the foliage or the stems of the plants and then by drying the plant pathogen control agent is approximately in a cancellate shape.

8. The use according to any one of claims 1, and 3 to 7, or the method according to any one of claim 2 to 7,
   wherein the cellulose nanofibers are a plant-derived nanofiber material selected from the group consisting of gramineous plants, broadleaf trees, and needleleaf trees.

9. The use according to any one of claims 1, and 3 to 8, or the method according to any one of claim 2 to 8,
   wherein in the cellulose nanofibers, a thickness is 3 to 200 nm, a crystallinity degree is greater than or equal to 50, an $\alpha$-cellulose content ratio of a raw material is 60 to 99 mass%, an average polymerization degree is 500 to 900, and an average molecular weight is 90000 to 140000.

10. The use according to any one of claims 1, and 3 to 9, or the method according to any one of claim 2 to 9,
    wherein a content of the cellulose nanofibers is 0.01 to 2.0 mass% with respect to a total mass of the plant pathogen control agent.

**11.** The use according to any one of claims 1, and 3 to 10, or the method according to any one of claim 2 to 10, wherein the cellulose nanofibers are contained in a plant pathogen control agent that further contains:

an aqueous solvent; and
a surfactant that is dissolved in the aqueous solvent,
wherein the surfactant is a non-ionic surfactant.


**Patentansprüche**

**1.** Verwendung von Cellulose-Nanofasern zur Bekämpfung von Pflanzenkrankheitserregern auf Pflanzen.

**2.** Verfahren zur Bekämpfung von Pflanzenpathogenen auf Pflanzen unter Verwendung von Cellulose-Nanofasern.

**3.** Die Verwendung nach Anspruch 1 oder das Verfahren nach Anspruch 2,
wobei die Pflanzenpathogene, die ein Ziel sein sollen, verursachende Bakterien sind, die aus der Gruppe ausgewählt sind, die aus Pseudomonas-Bakterium, Xanthomonas-Bakterium, Pectobacterium-Bakterium, Agrobacterium-Bakterium und Clavibacter-Bakterium besteht.

**4.** Die Verwendung nach Anspruch 1 oder 3 oder das Verfahren nach Anspruch 2 oder 3,
wobei es sich bei den Pflanzenpathogenen, die ein Ziel sein sollen, um Rostpilze, ausgewählt aus der Gruppe bestehend aus Phakopsora-Rostpilzen, Hemileia-Rostpilzen und Puccinia-Rostpilzen, oder um pathogene Pilze handelt.

**5.** Die Verwendung nach einem der Ansprüche 1, 3 und 4 oder das Verfahren nach einem der Ansprüche 2 bis 4,
wobei es sich bei den Zielpflanzen um Pflanzen handelt, die aus der Gruppe der Kreuzblütler, Hülsenfrüchte, Solanaceen und Rubiaceen ausgewählt sind.

**6.** Die Verwendung nach einem der Ansprüche 1 und 3 bis 5 oder das Verfahren nach einem der Ansprüche 2 bis 5,
wobei eine Oberfläche einer durch Aufbringen der in einem Pflanzenpathogen-Kontrollmittel als Wirkstoff enthaltenen Cellulose-Nanofasern auf Blätter oder Stängel der Pflanzen und anschließendes Trocknen des Pflanzenschutzmittels zu bildenden nanofaserbeschichteten Schicht Hydrophilie aufweist.

**7.** Die Verwendung nach einem der Ansprüche 1 und 3 bis 6 oder das Verfahren nach einem der Ansprüche 2 bis 6,
wobei die durch Aufbringen der in einem Pflanzenpathogen-Kontrollmittel als Wirkstoff enthaltenen Cellulose-Nanofasern auf das Blattwerk oder die Stängel der Pflanzen und anschließendes Trocknen des Pflanzenpathogen-Kontrollmittel zu bildende nanofaserbeschichtete Schicht annähernd eine verzweigte Form aufweist.

**8.** Die Verwendung nach einem der Ansprüche 1 und 3 bis 7 oder das Verfahren nach einem der Ansprüche 2 bis 7,
wobei es sich bei den Cellulose-Nanofasern um ein pflanzliches Nanofasermaterial handelt, das ausgewählt ist aus der Gruppe bestehend aus Gramineen, Laubbäumen und Nadelbäumen.

**9.** Die Verwendung nach einem der Ansprüche 1 und 3 bis 8 oder das Verfahren nach einem der Ansprüche 2 bis 8,
wobei in den Cellulose-Nanofasern eine Dicke von 3 bis 200 nm, ein Kristallinitätsgrad von größer oder gleich 50, ein $\alpha$-Cellulose-Gehaltsverhältnis eines Rohmaterials von 60 bis 99 Masse-%, ein durchschnittlicher Polymerisationsgrad von 500 bis 900 und ein durchschnittliches Molekulargewicht von 90000 bis 140000 vorliegt.

**10.** Die Verwendung nach einem der Ansprüche 1 und 3 bis 9 oder das Verfahren nach einem der Ansprüche 2 bis 9,
wobei der Gehalt an Cellulose-Nanofasern 0,01 bis 2,0 Masse-%, bezogen auf die Gesamtmasse des Pflanzenpathogen-Kontrollmittels, beträgt.

**11.** Verwendung nach einem der Ansprüche 1 und 3 bis 10 oder Verfahren nach einem der Ansprüche 2 bis 10,
wobei die Cellulose-Nanofasern in einem Pflanzenpathogen-Kontrollmittel enthalten sind, das ferner enthält:

ein wässriges Lösungsmittel; und
ein Tensid, das in dem wässrigen Lösungsmittel gelöst ist,
wobei das Tensid ein nicht-ionisches Tensid ist.

**Revendications**

1. Utilisation de nanofibres de cellulose pour réguler des pathogènes végétaux sur des plantes.

2. Procédé de régulation de pathogènes végétaux sur des plantes en utilisant des nanofibres de cellulose.

3. Utilisation selon la revendication 1 ou procédé selon la revendication 2,
   dans laquelle·lequel les pathogènes végétaux pour être une cible sont une bactérie causale sélectionnée dans le groupe constitué de *Pseudomonas bacterium, Xanthomonas bacterium, Pectobacterium bacterium, Agrobacterium bacterium,* et *Clavibacter bacterium.*

4. Utilisation selon la revendication 1 ou 3, ou procédé selon la revendication 2 ou 3,
   dans laquelle·lequel les pathogènes végétaux pour être une cible sont des champignons de la rouille sélectionnés dans le groupe constitué des champignons de la rouille *Phakopsora,* des champignons de la rouille *Hemileia,* et des champignons de la rouille *Puccinia,* ou des champignons pathogènes.

5. Utilisation selon l'une quelconque des revendications 1, 3 et 4, ou procédé selon l'une quelconque des revendications 2 à 4,
   dans laquelle·lequel les plantes pour être une cible sont des plantes sélectionnées dans le groupe constitué des plantes de la famille des crucifères, des plantes de la famille des légumineuses, des plantes de la famille des solanacées, et des plantes de la famille des rubiacées.

6. Utilisation selon l'une quelconque des revendications 1, et 3 à 5, ou procédé selon l'une quelconque des revendications 2 à 5,
   dans laquelle·lequel une surface d'une couche revêtue de nanofibres à former en appliquant les nanofibres de cellulose contenues dans un agent de régulation de pathogènes végétaux comme ingrédient actif sur le feuillage ou les tiges des plantes et ensuite par séchage de l'agent de régulation de pathogènes végétaux présente une hydrophilie.

7. Utilisation selon l'une quelconque des revendications 1, et 3 à 6, ou procédé selon l'une quelconque des revendications 2 à 6,
   dans laquelle·lequel la couche revêtue de nanofibres à former en appliquant les nanofibres de cellulose contenues dans un agent de régulation de pathogènes végétaux comme ingrédient actif sur le feuillage ou les tiges des plantes et ensuite par séchage de l'agent de régulation de pathogènes végétaux se présente approximativement sous une forme réticulée.

8. Utilisation selon l'une quelconque des revendications 1, et 3 à 7, ou procédé selon l'une quelconque des revendications 2 à 7,
   dans laquelle·lequel les nanofibres de cellulose sont un matériau d'origine végétale sélectionné dans le groupe constitué des plantes de la famille des graminées, des arbres à larges feuilles, et des arbres à aiguilles.

9. Utilisation selon l'une quelconque des revendications 1, et 3 à 8, ou procédé selon l'une quelconque des revendications 2 à 8,
   dans laquelle·lequel dans les nanofibres de cellulose, une épaisseur est de 3 à 200 nm, un degré de cristallinité est supérieur ou égal à 50, un ratio de la teneur en $\alpha$-cellulose d'une matière brute est de 60 à 99 % en masse, un degré de polymérisation moyen est de 500 à 900, et un poids moléculaire moyen est de 90 000 à 140 000.

10. Utilisation selon l'une quelconque des revendications 1, et 3 à 9, ou procédé selon l'une quelconque des revendications 2 à 9,
    dans laquelle·lequel une teneur des nanofibres de cellulose est de 0,01 à 2,0 % en masse par rapport à une masse totale de l'agent de régulation de pathogènes végétaux.

11. Utilisation selon l'une quelconque des revendications 1, et 3 à 10, ou procédé selon l'une quelconque des revendications 2 à 10, dans laquelle·lequel les nanofibres de cellulose sont contenues dans un agent de régulation de pathogènes végétaux qui contient en outre :

    un solvant aqueux ; et
    un tensioactif qui est dissous dans le solvant aqueux,

dans laquelle·lequel le tensioactif est un tensioactif non ionique.

# FIG. 1

FOLIAGE OF CABBAGE PLANT
SUBJECTED TO BACTERIAL INOCULATION

<CONTROL>

<AGRICULTURAL
CHEMICALS>

<CELLULOSE
NANOFIBERS>

# FIG. 2

NUMBER OF BACTERIUM OF FOLIAGE OF CABBAGE
PLANT SUBJECTED TO BACTERIAL INOCULATION

# FIG. 3

**DISEASE CONTROL RATIO OF FOLIAGE OF CABBAGE PLANT SUBJECTED TO BACTERIAL INOCULATION**

Legend: WITH SURFACTANT (shaded) · WITHOUT SURFACTANT (open)

Y-axis: DISEASE CONTROL RATIO (%), scale 0 to 100.

X-axis categories: CONTROL; LOW DEFIBERATING TREATMENT (0.01%, 0.03%, 0.1%); HIGH DEFIBERATING TREATMENT (0.01%, 0.03%, 0.1%).

LOW DEFIBERATING TREATMENT and HIGH DEFIBERATING TREATMENT are grouped under BAMBOO-DERIVED CELLULOSE NANOFIBERS.

EP 3 854 212 B1

FIG. 4

DISEASE CONTROL RATIO OF FOLIAGE OF CABBAGE
PLANT SUBJECTED TO BACTERIAL INOCULATION

# FIG. 5

FOLIAGE OF SOYBEAN PLANT
SUBJECTED TO BACTERIAL INOCULATION

<CONTROL>  <CELLULOSE
NANOFIBERS>

# FIG. 6

FOLIAGE OF SOYBEAN PLANT
SUBJECTED TO RUST FUNGAL INOCULATION

<CONTROL>  <CELLULOSE
NANOFIBERS>

# FIG. 7

FOLIAGE OF TOMATO PLANT
SUBJECTED TO BACTERIAL INOCULATION

<CONTROL>          <CELLULOSE
NANOFIBERS>

# FIG. 8

FOLIAGE OF TOBACCO PLANT
SUBJECTED TO BACTERIAL INOCULATION

<CONTROL>          <CELLULOSE
NANOFIBERS>

# FIG. 9

FOLIAGE OF COFFEE TREE SEEDLING
SUBJECTED TO RUST FUNGAL INOCULATION

<CONTROL>        <CELLULOSE NANOFIBERS>

FIG. 10

NUMBER OF BLOTCHES OF FOLIAGE OF CABBAGE PLANT SUBJECTED TO RUST FUNGAL INOCULATION

NUMBER OF BLOTCHES (pieces/1cm$^2$)

CONTROL

CELLULOSE NANOFIBERS

BAMBOO-DERIVED
- HIGH DEFIBERATION
- LOW DEFIBERATION
- EXTREMELY LOW DEFIBERATION

NEEDLELEAF TREE-DERIVED
- HIGH DEFIBERATION
- LOW DEFIBERATION
- EXTREMELY LOW DEFIBERATION

# FIG. 11

### SEM IMAGE OF FOLIAGE OF CABBAGE PLANT
### SUBJECTED TO BACTERIAL INOCULATION

50µm                                30µm

<CONTROL>

50µm                                30µm

<CELLULOSE NANOFIBERS>

# FIG. 12

CONFOCAL LASER MICROSCOPE IMAGE OF FOLIAGE OF CABBAGE PLANT
SUBJECTED TO BACTERIAL INOCULATION

<CONTROL>

<CELLULOSE NANOFIBERS>

**EP 3 854 212 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015157796 A
- JP 2016065116 A
- JP 2014050835 A
- WO 2018144482 A
- JP 2016069295 A
- JP 2005270891 A
- JP 2017205683 A
- JP 2015142900 A